# EUROPÄISCHE PATENTSCHRIFT

(11) **EP 1 789 247 B1**
(45) Veröffentlichungstag und Bekanntmachung des Hinweises auf die Patenterteilung: **08.10.2008**
(21) Anmeldenummer: 05769942.3
(22) Anmeldetag: 26.07.2005
(51) Int. Cl.: B29C 49/56

(54) **VORRICHTUNG ZUR BLASFORMUNG VON BEHÄLTERN**
DEVICE FOR BLOW MOLDING CONTAINERS
DISPOSITIF DE MOULAGE PAR SOUFFLER DE RÉCIPIENTS

(30) Priorität: 18.09.2004 DE 102004045405
(43) Veröffentlichungstag der Anmeldung: 30.05.2007
(73) Patentinhaber: SIG Technology Ltd., 8212 Neuhausen am Rheinfall (CH)
(72) Erfinder: KLATT, Dieter, 22147 Hamburg (DE); LITZENBERG, Michael, 21502 Geesthacht (DE); LINKE, Michael, 22926 Ahrensburg (DE)
(74) Vertreter: Klickow, Hans-Henning
(86) Internationale Anmeldenummer: PCT/DE2005/001316
(87) Internationale Veröffentlichungsnummer: WO 2006/029585

(56) Entgegenhaltungen:
- DE-A1- 10 212 896
- FR-A- 2 841 495
- US-A- 3 843 286
- PATENT ABSTRACTS OF JAPAN Bd. 012, Nr. 018 (M-660), 20. Januar 1988 (1988-01-20) & JP 62 178319 A (TOPPAN PRINTING CO LTD), 5. August 1987 (1987-08-05)
- PATENT ABSTRACTS OF JAPAN Bd. 016, Nr. 177 (M-1241), 28. April 1992 (1992-04-28) & JP 04 018325 A (NISSEI EE S B KIKAI KK), 22. Januar 1992 (1992-01-22)

## Beschreibung

Die Erfindung betrifft eine Vorrichtung zur Blasformung von Behältern, die mindestens eine Blasstation zur Umformung von thermoplastischen Vorformlingen in die Behälter aufweist und bei der die Blasstation mit mindestens zwei von Formträgern gehalterten Blasformsegmenten sowie einem Bodenteil versehen ist, sowie bei der sowohl die Formträger als auch das Bodenteil mechanisch positionierbar angeordnet sind, und bei der die Formträger und das Bodenteil von einer gemeinsamen mechanischen Antriebseinrichtung permanent miteinander gekoppelt sind.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Über-gaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine An-wendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung von Öffnungs- und Schließbewegungen der Blasstation sowie die Durchführung von Hubbewegunggen des Bodenteiles erfolgt typischerweise mechanisch gesteuert. Bei Blasstationen, die auf rotierenden Transporträdern angeordnet sind, werden ortsfest auf dem Maschinengestell angeordnete Kurvensegmente verwendet, entlang deren Kurvenrollen geführt werden, die mit den zu bewegenden Bauelementen verbunden sind. Die Kurvensegmente werden in der Regel nur entlang derjenigen Teile des Blasrades angeordnet, entlang deren eine Veränderung der Positionierung der zugeordneten Kurvenrollen vorgesehen ist. In der jeweils vorgesehenen Endposition werden die Kurvenrollen dann durch geeignete Mittel stabilisiert.

Zur Vermeidung von mechanischen Schäden bei einer nicht öffnenden Verriegelung der Blasstation sind sowohl der Antriebsmechanismus für die Formträger als auch der Antriebsmechanismus für die Hubvorrichtung des Bodenteiles mit einer Überlastsicherung versehen. Die verwendeten Überlastsicherungen erfordern einen entsprechenden Bauraum und haben zugeordnete Kosten zur Folge.

Aus der DE 102 12 896 A1 ist es bereits bekannt, bei einer Blasmaschine mit stationär angeordneter Blasstation eine mechanische Kopplung der Formträger und des Bodenteiles vorzusehen. Die Formträger sind hierbei relativ zueinander verschieblich angeordnet und einer der Formträger weist ein Kurvensegment mit einer zur horizontalen schräg angeordneten Steuerkurve auf. In diese Kurve greift eine Positioniereinrichtung für die Bodenform mit einer Kurvenrolle ein, so daß bei einer Querverschiebung der Steuerkurve eine vertikale Positionierung des Bodenteiles hervorgerufen wird.

Aus der US-A-3,843,286 ist ebenfalls bereits eine mechanische Kopplung zwischen dem Bodenteil und den Formträgern einer Blasmaschine mit einer stationär angeordneten Blasstation bekannt, bei der die Formträger relativ zueinander verschieblich sind.

In der FR-A-2 841 495 wird eine weitere Anordnung zur Positionierung von Blasformträgern sowie einer Bodenform beschrieben. Hier sind die Formträger relativ zu einer Tragwelle verschwenkbar angeordnet.

Aus den PATENT ABSTRACTS OF JAPAN, Bd. 012, Nr. 018 (M-660), 20. Januar 1988 (1988-01-20) & JP 62 178319 A (TOPPAN PRINTING CO LTD) 5. Aug. 1987 (1987-08-05) ist eine Blasmaschine bekannt, bei der Blasformen für extrudierte schlauchartige Vorformlinge auf einem Transportrad angeordnet sind. In der PATENT ABSTRACTS OF JAPAN, Bd. 016, Nr. 177 (M-1241), 28. April 1992 (1992-04-28) & JP 04 018325 a (NISSEI EE B KIKAI KK), 22. Januar 1992 (1992-01-22) wird ein weiterer Mechanismus zum Öffnen und Schließen einer Blasform beschrieben. Auch hier ist die Blasform stationär positioniert.

Aufgabe der vorliegenden Erfindung ist es, eine Vorrichtung der einleitend genannten Art derart zu verbessern, daß eine kompakte Bauform unterstützt wird.

Diese Aufgabe wird erfindungsgemäß dadurch gelöst, daß die Blasstation auf einem rotierenden Blasrad angeordnet ist, daß die Antriebseinrichtung mit einer Steuerkurve gekoppelt ist und daß die Steuerkurve ortsfest im Bereich eines Maschinengestells der Vorrichtung zur Blasformung angeordnet ist.

Die permanente mechanische Kopplung ermöglicht es, für das Bodenteil und die Formträger einen gemeinsamen Antrieb und eine gemeinsame Überlastsicherung zu verwenden. Es werden hierdurch verminderte Herstellungskosten sowie ein verringerter Bedarf an Bauraum erreicht. Darüber hinaus erleichtert die permanente mechanische Kopplung des Bodenteils und der Formträger die Durchführung von Servicearbeiten an den Blasstationen, da die Blasstation unabhängig von der Positionierung der zugeordneten Kurvensteuerung manuell geöffnet werden kann und von einer Öffnungsbewegung der Formträger direkt und ohne zusätzliche Tätigkeiten des Servicepersonals die Hubbewegung des Bodenteiles abgeleitet wird.

Die permanente mechanische Kopplung vermeidet darüber hinaus mechanische Belastungen bei einem Einlaufen der Kurvenrollen in zugeordnete lokal begrenzte Kurvensegmente sowie Probleme aufgrund möglicher falscher Positionierungen der Kurvenrolle bei einem Einlaufen in die Kurvensegmente.

Ein weiterer konstruktiver vorteil ist darin zu sehen, daß aufgrund der permanenten mechanischen Kopplung des Bodenteiles und der Formträger nur noch eine gemeinsame Steuerkurve und eine gemeinsame Kurvenrolle erforderlich sind, so daß zusätzlich eine verbesserte Zugänglichkeit im Bereich des Blasrades erreicht werden kann.

Eine Vorgabe der erforderlichen Positionierbewegung kann dadurch erfolgen, daß die Antriebseinrichtung mit einer Steuerkurve gekoppelt ist.

Eine robuste und gleich präzise mechanische Realisierung kann dadurch erfolgen, daß die Antriebseinrichtung eine Steuerwelle aufweist, die mit einem Anlenkhebel zur Steuerung der Formträger und einem Positionierhebel zur Positionierung des Bodenteiles versehen ist.

Zur Anpassung der Antriebseinrichtung an konstruktive Gegebenheiten einer Blasstation ist vorgesehen, daß das Bodenteil über ein Distanzstück mit der Antriebseinrichtung gekoppelt ist.

Eine einfache und störungsarme Kinematik wird dadurch bereitgestellt, daß das Bodenteil mit einer Führungsbuchse verbunden ist, die entlang einer Welle verschieblich geführt ist.

Zu einer kompakten Konstruktion trägt es insbesondere bei, daß die Führungsbuchse entlang einer Stationsachse der Blasstation geführt ist.

Zur Durchführung von Öffnungs- und Schließbewegungen der Blasstation erweist es sich als vorteilhaft, daß für die Positionierung der Formträger ein scherenartiger Verstellmechanismus verwendet ist.

Eine einfache Vorgabe der durchzuführenden Hub- und Senkbewegungen des Bodenteils kann dadurch erfolgen, daß der Positionierhebel mit einer Kurvenrolle in eine Hubkurve eingreift, die im Bereich eines Kopplungselementes angeordnet ist, das mit der Führungsbuchse verbunden ist.

Für eine lang anhaltende störungsfreie Betriebsweise erweist es sich als besonders vorteilhaft, daß die Kurvenrolle in einer nutartig im Kopplungselement verlaufenden Hubkurve geführt ist.

Eine zeitliche Koordinierung der durchzuführenden Bewegungen kann dadurch erfolgen, daß durch die Anordnung des Anlenkhebels und des Positionierhebels ein zeitlicher Versatz zwischen der Durchführung von Bewegungen der Formträger und des Bodenteiles vorgegeben wird.

Eine weitere steuerungstechnische Variante besteht darin, daß ein Zeitversatz zwischen den Bewegungen der Formträger und des Bodenteiles durch einen Verlauf der Hubkurve vorgegeben ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine schematische Darstellung zur veranschaulichung einer permanenten mechanischen Kopplung zwischen den Formträgern und dem Bodenteil sowie einer gemeinsamen Kurvensteuerung.

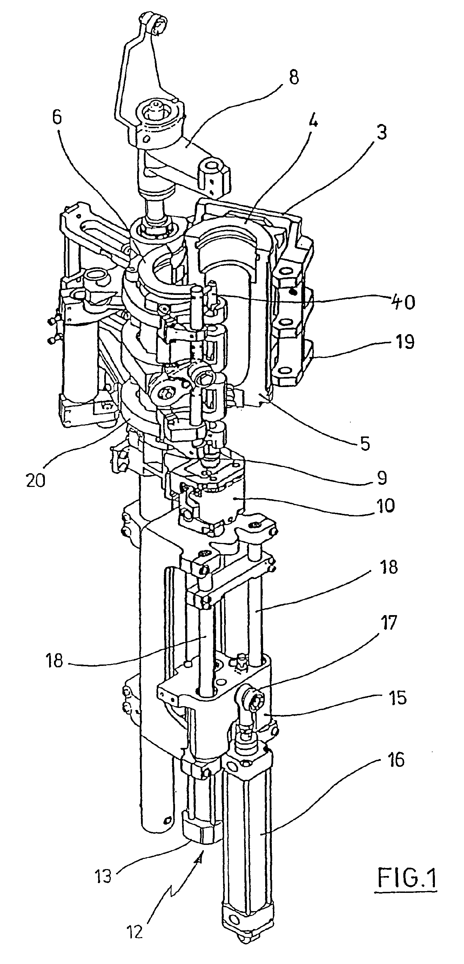

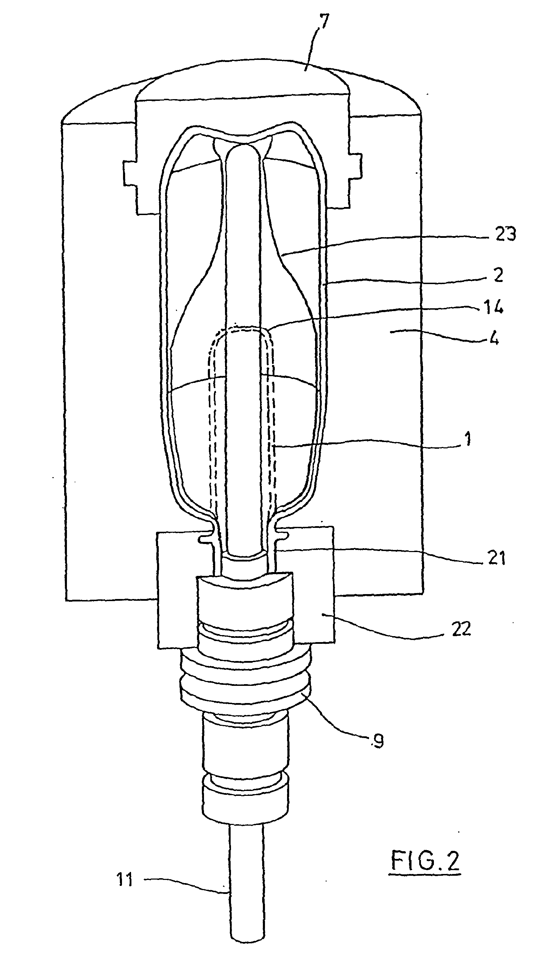

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

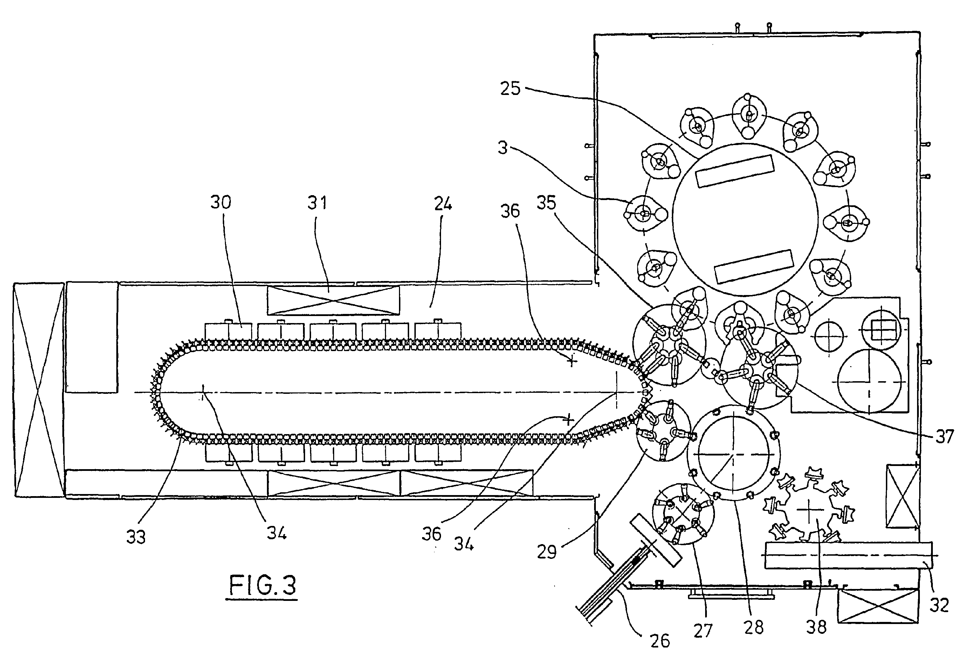

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Haupt-blasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

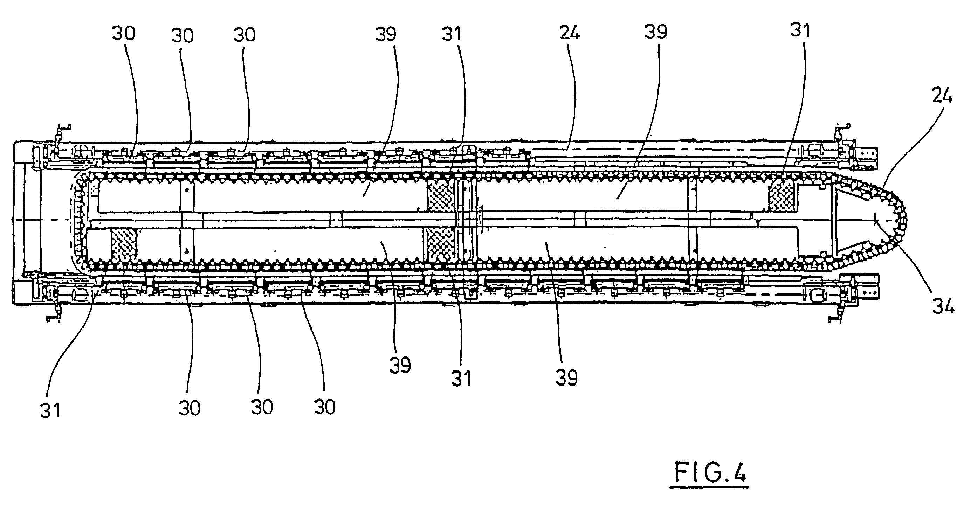

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungs-richtung für die Kühlluft im wesentlichen quer zu einer Transportrichtung der vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

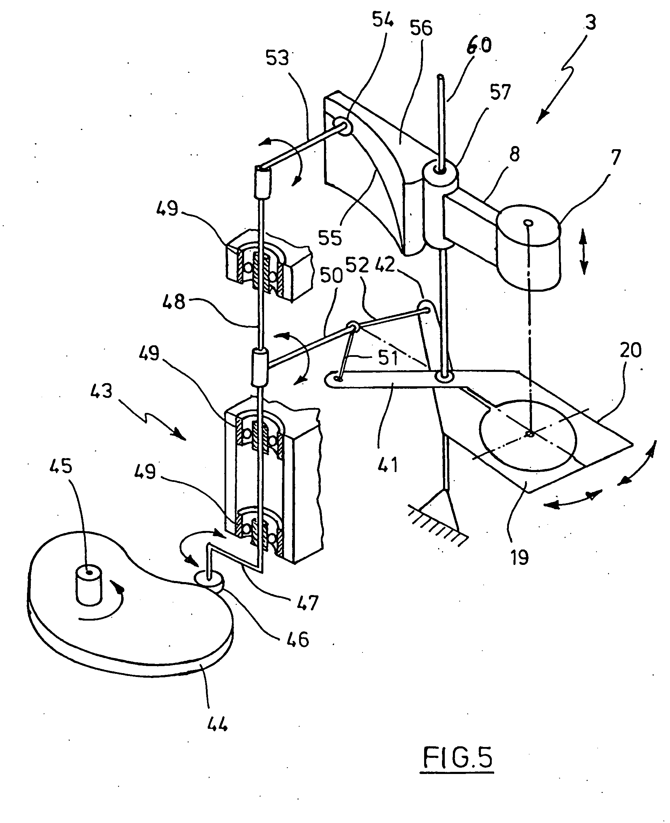

Fig. 5 zeigt schematisch den mechanischen Antrieb für die Bewegungsabläufe im Bereich der Formträger (19, 20) sowie des Bodenteils (7). Die Formträger (19, 20) sind vereinfacht dargestellt. Es ist zu erkennen, daß die Formträger (19, 20) relativ zu einer Stationsachse (60) verschwenkbar angeordnet sind. Über Betätigungsarme (41, 42) sind die Formträger (19) mit einer Antriebseinrichtung (43) gekoppelt. Die Antriebseinrichtung (43) weist eine Steuerkurve (44) auf, die ortsfest im Bereich eines Maschinengestells der Blasmaschine angeordnet ist.

Die Blasstationen (43) werden vom Blasrad (25) um eine Blasradachse (45) herum bewegt. Entlang der Steuerkurve (44) wird hierbei eine der jeweiligen Blasstation (3) zugeordnete Kurvenrolle (46) geführt. Die Kurvenrolle (46) ist an einem Querhebel (47) befestigt, der mit einer Steuerwelle (48) verbunden ist. Eine Schwenkbewegung des Querhebels (47) wird in einer Drehbewegung der Steuerwelle (48) umgesetzt. Die Steuerwelle (48) ist im Bereich einer Mehrzahl von Lagern (49) geführt.

An der Steuerwelle (48) ist ein Anlenkhebel (50) befestigt, der über Verbindungshebel (51, 52) mit den Betätigungsarmen (41, 42) der Formträger (19, 20) gekoppelt ist. Die verbindungshebel (51, 52) sind einerseits mit jeweils einem der Betätigungsarme (41, 42) verschwenkbar und andererseits verschwenkbar mit dem Anlenkhebel (50) verbunden. Eine von der Drehbewegung der Steuerwelle (48) verursachte Schwenkbewegung des Anlenkhebels (50) wird hierdurch in ein Zusammenführen bzw. Spreizen der Betätigungsarme (41, 42) und damit in ein Öffnen und Schließen der Formträger (19, 20) transformiert.

Die Steuerwelle (48) ist darüber hinaus mit einem Positionierhebel (53) gekoppelt, der im Bereich seines der Steuerwelle (48) abgewandten Endes eine Kurvenrolle (54) trägt. Die Rolle (54) wird entlang einer Hubkurve (55) geführt, die im Bereich eines Kopplungselementes (56) angeordnet ist. Das Kopplungselement (56) ist mit einer Führungsbuchse (57) verbunden, die beweglich entlang der Stationsachse (60) angeordnet ist. Die Führungsbuchse (57) ist ebenfalls mit dem Bodenteil (7) gekoppelt.

Bei der in Fig. 5 dargestellten Ausführungsform ist die Hubkurve (55) als nutförmige Vertiefung in einem gebogen begrenzten Kopplungselement (56) angeordnet. Die Krümmung verläuft hierbei konzentrisch zur Steuerwelle (48). Bei einer Drehbewegung des Positionierhebels (53) erfolgt über die Kurvenrolle (54) ein Anheben oder Absenken des Kopplungselementes (56) und damit ein synchrones Anheben oder Absenken des Bodenteiles (7).

Zur Erreichung eines Phasenversatzes zwischen einem Beginn bzw. einem Ende der Öffnungs- oder Schließbewegung der Formträger (19, 20) und dem Ablauf der Hubbewegung des Bodenteiles (7) kann die Hubkurve (55) mit einem horizontal verlaufenden Kurvenbereich versehen sein. Bei einer vertikal verlaufenden Steuerwelle (48) wird durch eine Bewegung der Kurvenrolle (54) in einem horizontalen Bereich der Hubkurve (55) keine Hub- oder Senkbewegung des Bodenteiles (7) vorgegeben. Eine Vorgabe der Geschwindigkeit der Durchführung der Hub- bzw. Senkbewegung des Bodenteiles (57) erfolgt durch die Steilheit der Hubkurve (55).

## Patentansprüche

1. Vorrichtung zur Blasformung von Behältern (2), die mindestens eine Blasstation (3) zur Umformung von thermoplastischen Vorformlingen (1) in die Behälter (2) aufweist und bei der die Blasstation (3) mit mindestens zwei von Formträgern (19, 20) gehalterten Blasformsegmenten sowie einem Bodenteil (7) versehen ist, sowie bei der sowohl die Formträger als auch das Bodenteil mechanisch positionierbar angeordnet sind, und bei der die Formträger (19, 20) und das Bodenteil (7) von einer gemeinsamen mechanischen Antriebseinrichtung (43) permanent miteinander gekoppelt sind, **dadurch gekennzeichnet, daß** die Blasstation (3) auf einem rotierenden Blasrad (25) angeordnet ist, daß die Antriebseinrichtung (43) mit einer Steuerkurve (44) gekoppelt ist und daß die Steuerkurve (44) ortsfest im Bereich eines Maschinengestells der Vorrichtung zur Blasformung angeordnet ist.

2. vorrichtung nach Anspruch 1, **dadurch gekennzeichnet, daß** die Antriebseinrichtung (43) eine Steuerwelle (48) aufweist, die mit einem Anlenkhebel (50) zur Steuerung der Formträger (19, 20) und einem Positionierhebel (53) zur Positionierung des Bodenteiles (7) versehen ist.

3. Vorrichtung nach Anspruch 1 oder 2, **dadurch gekennzeichnet, daß** das Bodenteil (7) über ein Distanzstück mit der Antriebseinrichtung (43) gekoppelt ist.

4. Vorrichtung nach einem der Ansprüche 1 bis 3, **dadurch gekennzeichnet, daß** das Bodenteil (7) mit einer Führungsbuchse (57) verbunden ist, die entlang einer Welle verschieblich geführt ist.

5. Vorrichtung nach Anspruch 4, **dadurch gekennzeichnet, daß** die Führungsbuchse (57) entlang einer Stationsachse (60) der Blasstation (3) geführt ist.

6. Vorrichtung nach einem der Ansprüche 1 bis 5, **dadurch gekennzeichnet, daß** für die Positionierung der Formträger (19, 20) ein scherenartiger Verstellmechanismus verwendet ist.

7. Vorrichtung nach einem der Ansprüche 1 bis 6, **dadurch gekennzeichnet, daß** der Positionierhebel (53) mit einer Kurvenrolle (54) in eine Hubkurve (55) eingreift, die im Bereich eines Kopplungselementes (56) angeordnet ist, das mit der Führungsbuchse (57) verbunden ist.

8. Vorrichtung nach Anspruch 7, **dadurch gekennzeichnet, daß** die Kurvenrolle (54) in einer nutartig im Kopplungselement (57) verlaufenden Hubkurve (55) geführt ist.

9. Vorrichtung nach einem der Ansprüche 1 bis 8, **dadurch gekennzeichnet, daß** durch die Anordnung des Anlenkhebels (50) und des Positionierhebels (53) ein zeitlicher Versatz zwischen der Durchführung von Bewegungen der Formträger (19, 20) und des Bodenteiles (7) vorgegeben wird.

10. Vorrichtung nach einem der Ansprüche 1 bis 9, **dadurch gekennzeichnet, daß** ein Zeitversatz zwischen den Bewegungen der Formträger (19, 20) und des Bodenteiles (7) durch einen Verlauf der Hubkurve (55) vorgegeben ist.

## Claims

1. Apparatus for blow moulding containers (2), which comprises at least one blowing station (3) for forming thermoplastic parisons (1) into the containers (2) and in which the blowing station (3) is provided with at least two blow moulding segments supported by mould carriers (19, 20) as well as with a base part (7), and in which both the mould carriers and the base part are disposed in a mechanically positionable manner, and in which the mould carriers (19, 20) and the base part (7) are permanently coupled to one another by a common mechanical drive device (43), **characterized in that** the blowing station (3) is disposed on a rotating blowing wheel (25), that the drive device (43) is coupled to a radial cam (44) and that the radial cam (44) is disposed in a stationary manner in the region of a machine frame of the blow moulding apparatus.

2. Apparatus according to claim 1, **characterized in that** the drive device (43) comprises a cam shaft (48) that is provided with a coupling lever (50) for controlling the mould carriers (19, 20) and with a positioning lever (53) for positioning the base part (7).

3. Apparatus according to claim 1 or 2, **characterized in that** the base part (7) is coupled by a spacer to the drive device (43).

4. Apparatus according to one of claims 1 to 3, **characterized in that** the base part (7) is connected to a guide bush (57) that is guided displaceably along a shaft.

5. Apparatus according to claim 4, **characterized in that** the guide bush (57) is guided along a station axle (60) of the blowing station (3).

6. Apparatus according to one of claims 1 to 5, **characterized in that** for the positioning of the mould carriers (19, 20) a scissors-like positioning mechanism is used.

7. Apparatus according to one of claims 1 to 6, **characterized in that** the positioning lever (53) engages with a cam roller (54) into a lifting cam (55) that is disposed in the region of a coupling element (56) that is connected to the guide bush (57).

8. Apparatus according to claim 7, **characterized in that** the cam roller (54) is guided in a lifting cam (55) that extends in a groove-like manner in the coupling element (57).

9. Apparatus according to one of claims 1 to 8, **characterized in that** by virtue of the arrangement of the coupling lever (50) and the positioning lever (53) a time lag is defined between the implementation of movements of the mould carriers (19, 20) and the base part (7).

10. Apparatus according to one of claims 1 to 9, **characterized in that** a time lag between the movements of the mould carriers (19, 20) and the base part (7) is defined by means of a shape of the lifting cam (55).

## Revendications

1. Dispositif pour le formage par soufflage de récipients (2) qui présente au moins un poste de soufflage (3) pour la transformation de préformes (1) en récipients (2), et dans lequel le poste de soufflage (3) est pourvu d'au moins de deux segments de moule de soufflage, maintenus par des supports de moules (19, 20), ainsi que d'une pièce de fond (7), et dans lequel aussi bien le support de moule que la pièce de fond sont agencés de manière à pouvoir être positionnés mécaniquement, et dans lequel les supports de moules (19, 20) et la pièce de fond (7) sont couplés ensemble, en permanence, par un dispositif de commande (43) mécanique commun, **caractérisé en ce que** le poste de soufflage (3) est disposé sur une roue de soufflage (25) rotative, que le dispositif de commande (43) est couplé avec une came de commande (44) et que la came de commande (44) est installée fixement dans la zone d'un bâti de machine du dispositif formage par soufflage.

2. Dispositif selon la revendication 1, **caractérisé en ce que** le dispositif de commande (43) présente un arbre de commande (48) qui est pourvu d'un levier d'articulation (50) pour la commande des supports de moules (19, 20) et d'un levier de positionnement (53) pour le positionnement de la pièce de fond (7).

3. Dispositif selon revendication 1 ou 2, **caractérisé en ce que** la pièce de fond (7) est couplée avec le dispositif de commande (43) par l'intermédiaire d'une pièce d'écartement.

4. Dispositif selon l'une des revendications 1 à 3, **caractérisé en ce que** la pièce de fond (7) est reliée à une douille de guidage (57) qui est conduite en pouvant être déplacée le long d'un arbre.

5. Dispositif selon la revendication 4, **caractérisé en ce que** la douille de guidage (57) est conduite le long d'un axe (60) du poste de soufflage (3).

6. Dispositif selon l'une des revendications 1 à 5, **caractérisé en ce que**, pour le positionnement des supports de moules (19, 20), on utilise un mécanisme de déplacement genre ciseaux.

7. Dispositif selon l'une des revendications 1 à 6, **caractérisé en ce que** le levier de positionnement (53) s'engage, avec un galet de courbe (54), dans une came de course (55) qui est disposée dans la zone d'un élément de couplage (56) relié à la douille de guidage (57).

8. Dispositif selon la revendication 7, **caractérisé en ce que** le galet de courbe (54) est guidé dans une hubkurve (55) qui s'étend en forme de rainure dans l'élément de couplage (57).

9. Dispositif selon l'une des revendications 1 à 8, **caractérisé en ce que**, par la disposition du levier d'articulation (50) et du levier de positionnement (53), est déterminé un décalage dans le temps entre la réalisation des mouvements des supports de moules (19, 20) et de la pièce de fond (7).

10. Dispositif selon l'une des revendications 1 à 9, **caractérisé en ce qu'**un décalage dans le temps, entre les mouvements des supports de moules (19, 20) et de la pièce de fond, (7) est prédéterminé par l'évolution de la came de course (55).
